(19) Europäisches Patentamt
European Patent Office
Office européen des brevets

(11) **EP 4 756 936 A1**

(12) **EUROPEAN PATENT APPLICATION**
published in accordance with Art. 153(4) EPC

(43) Date of publication:
**10.06.2026 Bulletin 2026/24**

(21) Application number: **24904396.9**

(22) Date of filing: **12.12.2024**

(51) International Patent Classification (IPC):
***H01M 8/0208*** (2016.01)    ***H01M 8/0228*** (2016.01)
***C22C 14/00*** (2006.01)    ***C22F 1/18*** (2006.01)
***C23C 8/12*** (2006.01)

(52) Cooperative Patent Classification (CPC):
**C22C 14/00; C22F 1/18; C23C 8/12; H01M 8/0208;**
**H01M 8/0228; Y02E 60/50; Y02P 70/50**

(86) International application number:
**PCT/KR2024/096813**

(87) International publication number:
**WO 2025/127831 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 KR 20230183520**

(71) Applicant: POSCO Co., Ltd
**Gyeongsangbuk-do 37859 (KR)**

(72) Inventors:
• KIM, Jonghee
  **Daejeon 34200 (KR)**
• SEO, Bosung
  **Pohang-si Gyeongsangbuk-do 37656 (KR)**
• KIM, Jinsuk
  **Pohang-si Gyeongsangbuk-do 37671 (KR)**
• LEE, Munsoo
  **Pohang-si Gyeongsangbuk-do 37834 (KR)**

(74) Representative: **Nederlandsch Octrooibureau
P.O. Box 29720
2502 LS The Hague (NL)**

(54) **TITANUIM PLATE FOR BIPOLAR PLATE WITH EXCELLENT SURFACE ELECTRICAL CONDUCTIVITY AND DURABILITY AND MANUFACTURING METHOD THEREOF**

(57)    The present disclosure discloses a titanium sheet for a fuel cell separator having excellent surface conductivity and durability. The titanium sheet for a fuel cell separator, comprising: a base metal comprising, by weight percent (wt%), 0.001% to 0.09% of Si, 0.065% or less of Fe, and the balance of Ti and unavoidable impurities; and a surface oxide layer comprising, by weight percent (wt%), 0.20% or less of Si, 0.20% or less of O, and the balance of Ti and unavoidable impurities; wherein the surface oxide layer satisfies Formula (1) at a position where the oxygen (O) content is at its maximum within the surface oxide region,

$$\text{Formula (1)}: 0.05 \leq Si / (Ti + O) \leq 0.4$$

where Si, Ti, and 0 in Formula (1) represent the content (wt%) of each respective element at the position.

[FIG. 1]

## Description

[Technical Field]

The present disclosure relates to a separator material having excellent surface conductivity and durability, and more particularly, to a titanium (Ti) sheet for a fuel cell separator, capable of omitting a coating process and having excellent durability and surface conductivity even in a high potential operating environment of a fuel cell.

[Background Art]

Titanium's excellent corrosion resistance leads to its consideration as a material for a fuel cell separator. However, a passivation film formed on the surface layer, despite securing corrosion resistance, presents a disadvantage in being unable to secure low contact resistance due to the film's semiconductor characteristics.

For a resolution of this problem, Patent Document 1 discloses a technique of coating graphite powder on a titanium surface. However, the manufacturing process presents complications, and a problem of conductivity inhibition due to peeling exists.

Meanwhile, Patent Document 2 discloses a technique for forming a noble metal thin film layer on a metal member surface; however, high manufacturing costs are problematic.

Also, Patent Document 3 discloses a technique for forming a phase comprising a Ti2O3 phase on a titanium surface, but the manufacturing process requires a reduction treatment process by carbon, and a limitation in securing conductivity exists.

Furthermore, Patent Document 4 discloses a process of applying carbon black to a titanium substrate surface and heat-treating it. However, the application of the carbon black requires an additional process, thereby leading to a problem of increased manufacturing costs.

(Prior Art Documents)

Patent Document 1: Japanese Patent No. 5342462 (Publication Date: April 14, 2011)

Patent Document 2: Japanese Unexamined Patent Publication No. 2003-105523 (Publication Date: April 9, 2003).

Patent Document 3: Korean Laid-Open Patent Publication No. 10-2019-0095472 (Publication date: August 14, 2019)

Patent Document 4: Japanese Unexamined Patent Publication No. 2019-133863 (publication date: August 8, 2019)

[Disclosure]

[Technical Problem]

For resolving the aforementioned problems, the present disclosure provides a fuel cell separator material requiring no additional coating, by controlling components of a titanium (Ti) base metal and enabling easy formation of a conductive oxide layer on a surface oxide layer, thereby simultaneously securing manufacturing cost, conductivity, and durability.

[Technical Solution]

A titanium sheet for a fuel cell separator, comprising a base metal and a surface oxide layer, wherein the base metal comprises, by wt%: Si: 0.001% to 0.09%, Fe: 0.065% or less, the balance of Ti and unavoidable impurities; and wherein the surface oxide layer comprises, by wt%: Si: 0.20% or less, O: 0.20% or less, the balance of Ti and unavoidable impurities;

wherein the surface oxide layer, at a point where the wt% of O is at a maximum, satisfies Formula (1) below.

$$\text{Formula (1): } 0.05 \leq Si/(Ti+O) \leq 0.4$$

(wherein Si, Ti, and O represent the content (wt%) of each element.)

Also, according to an example of the present disclosure, a thickness of the surface oxide layer of the titanium sheet for a fuel cell separator is 1.5 nm to 300 nm.

In addition, according to an example of the present disclosure, the titanium sheet for a fuel cell separator can have an initial surface contact resistance of 10mΩcm$^2$ or less.

Also, according to an example of the present disclosure, the titanium sheet for a fuel cell separator has a surface contact resistance after a durability test of 10mΩcm$^2$ or less.

According to an example of the present disclosure, a method for manufacturing a titanium sheet for a fuel cell separator comprises: a step of preparing a titanium ingot by melting raw materials comprising, by wt%, Si: 0.001% to 0.09%, Fe: 0.065% or less, and the balance of Ti and unavoidable impurities;

a step of manufacturing a titanium slab by heating the titanium ingot;

a step of hot-rolling the titanium slab;

a step of providing a titanium sheet by cold-rolling and annealing the titanium slab; and a step of forming a surface oxide layer by heating the titanium sheet at a temperature of 500°C to 900°C for 10 seconds to 3000 seconds in an oxygen partial pressure atmosphere of 10$^{-30}$ bar to 10$^{-8}$ bar.

Further, in an example of the present disclosure, the oxygen partial pressure atmosphere in the step of forming the surface oxide layer of the method for manufacturing a titanium sheet for a fuel cell separator is 2.1x10$^{-20}$ bar to 6x10$^{-9}$ bar.

Further, according to an example of the present disclosure, the heating temperature in the step of forming the surface oxide layer of the method for manufacturing a titanium sheet for a fuel cell separator is 650°C to 850°C.

The method of Claim 5, wherein a heating time in the step of forming the surface oxide layer is 30 seconds to 3000 seconds.

Also, according to an example of the present disclosure, a method for manufacturing a titanium sheet for a fuel cell separator can produce the surface oxide layer that, at a point where the wt% of O is at a maximum, satisfies Formula (1) below.

$$\text{Formula (1): } 0.05 \leq Si/(Ti+O) \leq 0.4$$

(wherein Si, Ti, and O represent the content (wt%) of each element).

Also, according to an example of the present disclosure, in the method for manufacturing a titanium sheet for a fuel cell separator, the thickness of the surface oxide layer may be 1.5 nm to 300 nm.

Also, according to an example of the present disclosure, a method for manufacturing a titanium sheet for a fuel cell separator may have an initial surface contact resistance of 10 mΩcm2 or less.

The method of Claim 5, wherein a surface contact resistance after a durability test is 10 mΩcm2 or less.

[Advantageous Effects]

The present disclosure enables the provision of a titanium sheet for a fuel cell separator, the titanium sheet having excellent surface conductivity and durability.

[Description of Drawings]

FIG. 1 is a photograph illustrating components of a surface layer and a base metal, the components measured by surface analysis performed on example 1 using Transmission Electron Microscopy Energy Dispersive X-ray Spectroscopy.

FIG. 2 is a photograph illustrating surface analysis performed for Comparative Example 1 by transmission electron microscopy-energy dispersive X-ray spectroscopy, which measures the components of the surface layer and the base metal.

[Modes of the Invention]

The following describes preferred modes of the present disclosure. However, the modes of the present disclosure are subject to various modifications, and the technical spirit of the present disclosure is not limited to the modes described below. Furthermore, the modes of the present disclosure are provided for a more complete description of the present disclosure to one of ordinary skill in the art.

Terms used in the present disclosure are used solely for describing specific examples. Accordingly, singular expressions comprise plural expressions, an explicit contextual requirement of singularity being absent. Additionally, terms such as 'comprise' or 'include' used in the present disclosure are used for clearly indicating the presence of features, steps, functions, components, or combinations thereof described in the specification, not for preliminarily excluding the presence of other features, steps, functions, components, or combinations thereof.

A description of the drawings is provided prior to the description of the titanium sheet hereinafter.

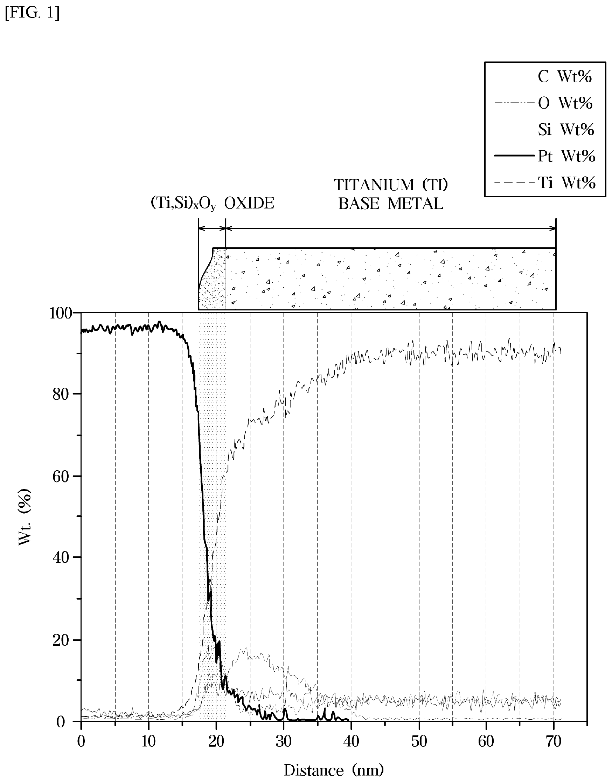

FIG. 1 is a photograph obtained by surface analysis using transmission electron microscope energy dispersive X-ray spectroscopy for example 1, measuring components of a surface layer and a base metal. Referring to FIG. 1, the surface oxide layer is confirmed to be composed of (Ti,Si)xOy oxide in the case of the titanium sheet according to an example 1 of the present disclosure.

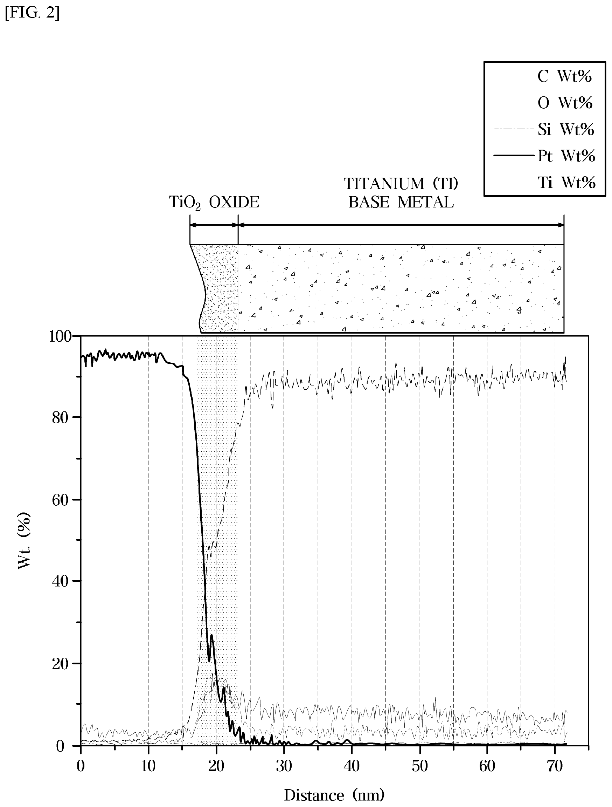

FIG. 2 is a photograph measuring components of a surface layer and a base metal by performing surface analysis for Comparative Example 1 using transmission electron microscope energy dispersive X-ray spectroscopy. Referring to FIG. 2, it is confirmed that a surface oxide layer of the titanium sheet of Comparative Example 1 is composed of a $TiO_2$ oxide.

The drawings have been described above. Hereinafter, a titanium sheet for a fuel cell separator according to an example of the present disclosure will be described.

A titanium sheet for a fuel cell separator, comprising: a base metal comprising, by wt%: Si: 0.001% to 0.09%; Fe: 0.065% or less; the balance of Ti and unavoidable impurities; and a surface oxide layer comprising, by wt%: Si: 0.20% or less; O: 0.20% or less; the balance of Ti and unavoidable impurities; wherein surface analysis, performed by transmission electron microscopy energy dispersive X-ray spectroscopy, reveals an outermost surface layer comprising Ti, Si, and O as essential elements; and wherein the surface oxide layer, at a point where the wt% of O is at a maximum, satisfies Formula (1) below.

$$\text{Formula (1): } 0.05 \leq Si/(Ti+O) \leq 0.4$$

(wherein Si, Ti, and O represent the content (wt%) of each element).

FIG. 2 shows that the composition of the surface layer of conventional titanium sheets consists of oxides comprising Ti and O. That is, Ti, through bonding with O, can be easily formed into stable $TiO_2$ oxides of several to tens of nm in the atmosphere or during the titanium sheet manufacturing process.

For securing the conductivity of the coating layer formed on the surface layer without a separate coating process, a titanium sheet of an example of the present disclosure provides optimization of the composition of the titanium (Ti) base metal and the constituent elements enabling conductivity in the surface oxide layer. Specifically, a titanium sheet comprising Si: 0.001 to 0.09 wt% in the base metal allows for concentration of the Si component on the surface layer and formation in the form of TiSixOy oxide under temperature conditions of a low oxygen partial pressure, and conductivity can be provided by the TiSixOy oxide. Here, the surface oxide layer is defined as a region comprising a maximum oxygen content of 10 wt% or more in the thickness direction of the sheet from the surface of the titanium sheet, and the base metal is defined as a region comprising a maximum oxygen content of less than 10 wt% in the thickness direction of the sheet from the surface of the titanium sheet.

The titanium sheet according to an example of the present disclosure may have conductivity, which is due to the lowering of the bandgap energy by the doping effect of Si, thereby changing the characteristics to conductive characteristics.

Additionally, a titanium sheet according to an example of the present disclosure can limit a lower limit of the Si content of the base metal to 0.001 wt% or more. This is because it is a minimum content value at which an Si doping effect, indicating conductivity of the surface layer, can appear. Further, the Si content of the base metal can be limited to 0.09% or less, because exceeding 0.09% can negatively affect the formability of the material.

Also, the titanium sheet according to an example of the present disclosure comprises an optimal surface oxide layer composition, wherein the surface oxide layer, at a point where the wt% of O is at a maximum, satisfies Formula (1) below.

$$\text{Formula (1): } 0.05 \leq Si/(Ti+O) \leq 0.4$$

(wherein Si, Ti, and O represent the content (wt%) of each element.)

The reason for limiting the composition ratio of the surface oxide layer as described above, at a point where the wt% of O is at a maximum, is as follows. For securing conductive characteristics due to Si doping, the lower limit of Formula (1) can be set to 0.05 or more. A value greater than 0.4 results in the conductive characteristics instead changing to semiconductor characteristics due to the concentration of Si, whereby the conductivity worsens; thus, the upper limit can be restricted to 0.4 or less.

Further, the titanium sheet for a fuel cell separator according to an example of the present disclosure can have a thickness of the surface oxide layer of 1.5 nm to 300 nm. The lower limit of the coating thickness can be 1.5 nm or more for ensuring a minimum coating thickness to maintain conductivity in a fuel cell environment, and for preventing performance degradation caused by restoration of the $TiO_2$ coating layer upon destruction of the coating layer. The upper limit can be restricted to 300 nm for preventing the occurrence of defects such as cracks during an application of a separator molding process after manufacturing the titanium sheet.

Further, the titanium sheet for a fuel cell separator according to an example of the present disclosure, wherein the titanium base metal may be composed of a pure titanium material or a titanium alloy, and may comprise, by wt%, Si: 0.001% to 0.09%.

In addition, a titanium sheet for a fuel cell separator according to an example of the present disclosure has an initial surface contact resistance of 10mΩcm$^2$ or less, and a surface contact resistance after a durability test is 10mΩcm$^2$ or less.

Furthermore, the titanium sheet for a fuel cell separator according to an example of the present disclosure may comprise, in the outermost surface layer, Ti, Si, and O as essential elements, and one or more of C, N, Mg, Al, and V as other impurities.

A method for manufacturing a titanium sheet for a fuel cell separator according to an example of the present disclosure comprises: a step of preparing a titanium ingot by melting raw materials comprising, by wt%, Si: 0.001% to 0.09%, Fe: 0.065% or less, and the balance of Ti and unavoidable impurities; a step of manufacturing a titanium slab by heating the titanium ingot; a step of hot-rolling the titanium slab; a step of providing a titanium sheet by cold-rolling and annealing the titanium slab; and a step of forming a surface oxide layer by heating the titanium sheet at a temperature of 500°C to 900°C for 10 seconds to 3000 seconds in an oxygen partial pressure atmosphere of $10^{-30}$ bar to $10^{-8}$ bar.

The reasons for the aforementioned limitation of the oxygen partial pressure during the step of forming a surface oxide layer in a method for manufacturing a titanium sheet for a fuel cell separator according to an example of the present disclosure are as follows. An oxygen partial pressure of $10^{-8}$ bar or less enables formation of an atmosphere allowing Si diffusion and doping into the Ti, O compound layer on the surface, thereby forming a maximum oxygen partial pressure condition enabling Si diffusion. However, an oxygen partial pressure of less than $10^{-30}$ bar not only necessitates the use of excessive hydrogen, CO, $CO_2$, methane, propane gas, etc., to achieve said atmosphere, but also can incur high manufacturing costs. Therefore, the step of forming the surface oxide layer preferably comprises an oxygen partial pressure of $10^{-30}$ bar to $10^{-8}$ bar. Most preferably, said oxygen partial pressure can be $2.1\times10^{-20}$ bar to $6\times10^{-9}$ bar.

Further, in the method for manufacturing a titanium sheet for a fuel cell separator of an example of the present disclosure, the temperature and time in the step of forming the surface oxide layer are limited as described above for the following reasons. For Si diffusion, the lower limit of the heating temperature is limited to 500°C or more. For preventing a decrease in formability due to excessive grain growth, the heating temperature can be limited to 900°C or less. Additionally, considering the minimum to maximum retention time by Si doping in the surface oxide layer, a setting of the time for maintaining heating is performed, wherein the heating time is preferably 30 seconds to 3000 seconds at a heating temperature of 650°C to 850°C.

Hereinafter, the present disclosure will be described in more detail through preferred examples.

{example}

A 30kg ingot having the composition shown in Table 1 below was vacuum-melted. A material having a thickness of 4.5 mm was manufactured through a hot-rolling process. Subsequently, after two cold-rolling processes and two annealing processes, a titanium cold-rolled sheet (0.2 mm thickness) having the composition shown in Table 1 was manufactured.

[Table 1]

| Composition | Ti(wt%) | Si(wt%) | Fe(wt%) |
|---|---|---|---|
| Composition 1 | bal. | 0.001 | 0.06 |
| Composition 2 | bal. | 0.02 | - |
| Composition 3 | bal. | - | 0.065 |

Table 2 below presents the measured values of the composition ratio at the surface layer having a maximum O content, the thickness of the surface oxide layer, the initial surface contact resistance, and the surface contact resistance after a durability test. These measurements were obtained for the titanium sheet having the aforementioned composition, following its cold-rolling, and its subsequent heating and exposure to an oxygen atmosphere according to the conditions of Table 2.

[Table 2]

| | Comp osition | Heating Temp. (°C) | Holding Time (sec) | oxygen atmosph-ere | Compositional Ratio at Max. 0 Content Si(wt%)/[Ti( wt%) +O(wt% )] | Surface Coating Layer Thickness (nm) | Initial Contact Resistance (mΩcm$^2$) @1MPa | C Contact Resistance After Durability Test(mQ cm$^2$) @1MPa |
|---|---|---|---|---|---|---|---|---|
| Comparative Example 1 | Comp. 1 | 700 | 30 | $1.5 \times 10^{-4}$ | 0.01 | 6.2 | 125 | 270 |
| ComparativeExample 2 | Comp. 2 | 800 | 30 | $8 \times 10^{-5}$ | 0 | 65 | 78 | 150 |
| ComparativeExample 3 | Comp. 3 | 500 | 30 | $3.2 \times 10^{-9}$ | 0 | 12 | 127 | 325 |
| Example 1 | Comp. 1 | 800 | 30 | $2 \times 10^{-19}$ | 0.24 | 6.1 | 6.3 | 6.8 |
| Example 2 | Comp. 1 | 650 | 600 | $1.7 \times 10^{-12}$ | 0.05 | 55 | 7.2 | 7.8 |
| Example 3 | Comp. 2 | 850 | 3000 | $2.1 \times 10^{-20}$ | 0.4 | 280 | 5.5 | 5.6 |
| Example 4 | Comp. 2 | 750 | 20 | $6 \times 10^{-9}$ | 0.32 | 3 | 6 | 6.2 |

The cold-rolled sheets according to the comparative examples and examples of Table 2 were cut to 10cm x 10cm. Following ultrasonic cleaning in acetone for 1 hour in a laboratory, heat treatment was performed in a controlled atmosphere under a low oxygen partial pressure atmosphere. For controlling the low oxygen partial pressure atmosphere, atmosphere control used argon, hydrogen, carbon monoxide, carbon dioxide, methane, and propane gas. Oxygen partial pressure measurement used a Metlor oxygen partial pressure meter. After the heat treatment, surface analysis of the specimens was performed by transmission electron microscopy energy dispersive X-ray spectroscopy. FIG. 1 shows the composition of the surface oxide layer under the conditions of example 1, analyzed by transmission electron microscopy energy dispersive X-ray spectroscopy, wherein Si, Ti, and O components were detected in the surface layer, and the component ratio and contact resistance values for the components are presented in Table 2. Furthermore, FIG. 2 shows the surface oxide layer composition for comparative example 1, analyzed by transmission electron microscopy energy dispersive X-ray spectroscopy, wherein Ti and O components were detected in the surface layer, and the component ratio and contact resistance values for the components are presented in Table 2.

A contact resistance evaluation comprised: cutting a measurement sample to 5cm x 5cm; positioning carbon paper (GDL) / said sample / carbon paper (GDL) / said sample / carbon paper (GDL) inside upper/lower Cu plates; and evaluating an initial contact resistance by applying current to the Cu plate and connecting a voltage terminal to the said sample. For a durability evaluation in a fuel cell operating environment, the initial contact resistance evaluation sample underwent 100 hours of immersion in a 0.05M sulfuric acid + 2ppm hydrofluoric acid solution. A re-evaluation of the contact resistance confirmed the presence or absence of a change.

Examples 1 to 4 according to the present disclosure satisfy compositions 1 and 2, an oxygen partial pressure in the atmosphere of $10^{-30}$ bar to $10^{-8}$ bar, a temperature of 500°C to 900°C, and a heating time of 10 seconds to 3000 seconds. Formula (1) satisfies 0.05 to 0.4, confirming that the initial surface contact resistance and the contact resistance after a durability test satisfy 10 m$\Omega$cm$^2$ or less.

In contrast, Comparative Example 3 had Composition 3, an oxygen partial pressure in the atmosphere greater than $10^{-8}$ bar, and Formula (1) was less than 0.05. For Comparative Examples 1 and 2, an oxygen partial pressure in the atmosphere was greater than $10^{-8}$ bar, and Formula (1) was less than 0.05, and thus, the initial surface contact resistance and the surface contact resistance after a durability test were confirmed to be greater than 10m$\Omega$cm$^2$.

According to an example of the present disclosure, a titanium sheet can secure the conductivity of the surface oxide layer formed on the surface without a separate coating process by controlling a composition of a titanium (Ti) base metal and by readily forming the surface oxide layer as a conductive oxide layer.

While various exemplary embodiments of the present disclosure have been described above, the present disclosure is not limited thereby, and a person of ordinary skill in the art will understand that various changes and modifications are possible without departing from the concept and scope of the claims described below.

## Claims

1. A titanium sheet for a fuel cell separator, comprising a base metal and a surface oxide layer, wherein the base metal comprises, by wt%: Si: 0.001% to 0.09% Fe: 0.065% or less the balance of Ti and unavoidable impurities; wherein the surface oxide layer comprises, by wt%: Si: 0.20% or less O: 0.20% or less the balance of Ti and unavoidable impurities;

   and wherein the surface oxide layer, at a point where the wt% of O is at a maximum, satisfies

$$\text{Formula (1): } 0.05 \leq Si/(Ti+O) \leq 0.4$$

   (wherein Si, Ti, and O represent the content (wt%) of each element).

2. The titanium sheet for a fuel cell separator of Claim 1,
   wherein a thickness of the surface oxide layer is 1.5 nm to 300 nm.

3. The titanium sheet for a fuel cell separator of Claim 1,
   wherein an initial surface contact resistance is 10 m$\Omega$cm2 or less.

4. The titanium sheet for a fuel cell separator of Claim 1,
   wherein a surface contact resistance after a durability test is 10m$\Omega$cm$^2$ or less.

5. A method for manufacturing a titanium sheet for a fuel cell separator, the method comprising:

a step of preparing a titanium ingot by melting raw materials comprising, by wt%, Si: 0.001% to 0.09%, Fe: 0.065% or less, and the balance of Ti and unavoidable impurities;

a step of manufacturing a titanium slab by heating the titanium ingot;

a step of hot-rolling the titanium slab;

a step of providing a titanium sheet by cold-rolling and annealing the titanium slab; and

a step of forming a surface oxide layer by heating the titanium sheet at a temperature of 500°C to 900°C for 10 seconds to 3000 seconds in an oxygen partial pressure atmosphere of $10^{-30}$ bar to $10^{-8}$ bar.

6. The method of Claim 5,
wherein the oxygen partial pressure atmosphere in the step of forming the surface oxide layer is $2.1 \times 10^{-20}$ bar to $6 \times 10^{-9}$ bar.

7. The method of Claim 5,
wherein the heating temperature in the step of forming the surface oxide layer is 650°C to 850°C.

8. The method of Claim 5,
wherein a heating time in the step of forming the surface oxide layer is 30 seconds to 3000 seconds.

9. The method of Claim 5,

wherein the surface oxide layer, at a point where the wt% of O is at a maximum, satisfies Formula (1) below:

$$\text{Formula (1): } 0.05 \leq \text{Si}/(\text{Ti}+\text{O}) \leq 0.4$$

(wherein Si, Ti, and O represent the content (wt%) of each element).

10. The method of Claim 5, wherein a thickness of the surface oxide layer is 1.5 nm to 300 nm.

11. The method of Claim 5,
wherein an initial surface contact resistance is 10 mQcm2 or less.

12. The method of Claim 5,
wherein a surface contact resistance after a durability test is 10 mQcm2 or less.

[FIG. 1]

[FIG. 2]

## INTERNATIONAL SEARCH REPORT

| International application No. |
|---|
| **PCT/KR2024/096813** |

| **A.** | **CLASSIFICATION OF SUBJECT MATTER** |
|---|---|

**H01M 8/0208**(2016.01)i; **H01M 8/0228**(2016.01)i; **C22C 14/00**(2006.01)i; **C22F 1/18**(2006.01)i; **C23C 8/12**(2006.01)i

According to International Patent Classification (IPC) or to both national classification and IPC

| **B.** | **FIELDS SEARCHED** |
|---|---|

Minimum documentation searched (classification system followed by classification symbols)

H01M 8/0208(2016.01); C22C 14/00(2006.01); C22C 38/00(2006.01); C22C 38/50(2006.01); C22F 1/18(2006.01); C23C 28/00(2006.01); C25B 11/10(2006.01); H01B 13/00(2006.01); H01M 8/02(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연료전지 (fuel cell), 분리판 (bipolar plate), 티타늄 (titanium), 표면 피막층 (surface film layer), 잉곳 (ingot), 열간 압연 (hot rolling), 냉간 압연 (cold rolling), 산소분압 (oxygen partial pressure), 가열 (heating), 규소 (silicon, Si), 표면접촉저항 (surface contact resistance)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-0851687 B1 (JFE STEEL CORPORATION) 11 August 2008 (2008-08-11)<br>See claims 7 and 8; and paragraphs [0025], [0100], [0102], [0166], [0172]-[0198], [0211] and [0245]-[0248]. | 1-12 |
| Y | JP 2018-031057 A (KOBE STEEL LTD.) 01 March 2018 (2018-03-01)<br>See claim 1; paragraphs [0010]-[0012], [0014], [0022], [0038]-[0042] and [0044]-[0046]; and table 1. | 1-4 |
| Y | JP 2009-170116 A (KOBE STEEL LTD.) 30 July 2009 (2009-07-30)<br>See claims 1 and 2; and paragraphs [0043], [0057]-[0062], [0068]-[0072] and [0080]. | 5-12 |
| A | KR 10-2013-0142800 A (KOREA INSTITUTE OF MACHINERY & MATERIALS) 30 December 2013 (2013-12-30)<br>See abstract; and claims 1-16. | 1-12 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 April 2025** | **08 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/096813** |

**C.    DOCUMENTS CONSIDERED TO BE RELEVANT**

| Category* | Citation of document, with indication, where appropriate, of the relevant passages | Relevant to claim No. |
|---|---|---|
| A | JP 2006-190643 A (KOBE STEEL LTD.) 20 July 2006 (2006-07-20)<br>See abstract; and claims 1-16. | 1-12 |

## INTERNATIONAL SEARCH REPORT
### Information on patent family members

International application No.

**PCT/KR2024/096813**

| Patent document cited in search report | | | Publication date (day/month/year) | Patent family member(s) | | | Publication date (day/month/year) |
|---|---|---|---|---|---|---|---|
| KR | 10-0851687 | B1 | 11 August 2008 | CA | 2559589 | A1 | 29 September 2005 |
| | | | | CA | 2559589 | C | 31 May 2011 |
| | | | | CA | 2714829 | A1 | 29 September 2005 |
| | | | | CA | 2714829 | C | 09 February 2016 |
| | | | | EP | 1726674 | A1 | 29 November 2006 |
| | | | | EP | 1726674 | A4 | 24 October 2007 |
| | | | | EP | 1726674 | B1 | 10 May 2017 |
| | | | | JP | 2005-302713 | A | 27 October 2005 |
| | | | | JP | 2010-280989 | A | 16 December 2010 |
| | | | | JP | 5109234 | B2 | 26 December 2012 |
| | | | | JP | 5434807 | B2 | 05 March 2014 |
| | | | | KR | 10-2006-0123779 | A | 04 December 2006 |
| | | | | US | 2008-0233456 | A1 | 25 September 2008 |
| | | | | US | 2011-0024002 | A1 | 03 February 2011 |
| | | | | US | 8278009 | B2 | 02 October 2012 |
| | | | | WO | 2005-090626 | A1 | 29 September 2005 |
| JP | 2018-031057 | A | 01 March 2018 | CN | 109642273 | A | 16 April 2019 |
| | | | | CN | 109642273 | B | 09 March 2021 |
| | | | | EP | 3505646 | A1 | 03 July 2019 |
| | | | | EP | 3505646 | A4 | 19 February 2020 |
| | | | | EP | 3505646 | B1 | 05 January 2022 |
| | | | | JP | 6789035 | B2 | 25 November 2020 |
| | | | | KR | 10-2019-0039219 | A | 10 April 2019 |
| | | | | KR | 10-2190540 | B1 | 14 December 2020 |
| | | | | RU | 2719233 | C1 | 17 April 2020 |
| | | | | US | 2019-0203322 | A1 | 04 July 2019 |
| | | | | WO | 2018-038061 | A1 | 01 March 2018 |
| JP | 2009-170116 | A | 30 July 2009 | CN | 101483244 | A | 15 July 2009 |
| | | | | CN | 101483244 | B | 28 September 2011 |
| | | | | DE | 102009004196 | A1 | 23 July 2009 |
| | | | | KR | 10-0997267 | B1 | 29 November 2010 |
| | | | | KR | 10-2009-0077678 | A | 15 July 2009 |
| | | | | US | 2009-0181283 | A1 | 16 July 2009 |
| KR | 10-2013-0142800 | A | 30 December 2013 | KR | 10-1387551 | B1 | 24 April 2014 |
| JP | 2006-190643 | A | 20 July 2006 | JP | 4981284 | B2 | 18 July 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5342462 B
- JP 2003105523 A
- KR 1020190095472
- JP 2019133863 A